# EUROPEAN PATENT APPLICATION

(11) **EP 3 591 238 A1**
(43) Date of publication of application: **08.01.2020**
(21) Application number: 18181882.4
(22) Date of filing: 05.07.2018
(51) Int. Cl.: F04D 29/54, F04D 29/66, F04D 29/70, H02K 9/06, F04D 29/38

(54) **AXIAL FLOW FAN AND FAN GUARD FOR A MOTOR COOLING ASSEMBLY**

(71) Applicant: Xylem Europe GmbH, 8200 Schaffhausen (CH)
(72) Inventor: Cipelli, Matteo, 36100 Vicenza (IT); Sessa, Federico, 37100 Verona (IT); Scarpa, Diego, 36050 Sovizzo (VICENZA) (IT); Valente, Amedeo, 36031 Dueville (VICENZA) (IT)
(74) Representative: Modiano, Gabriella Diana

(57) **Abstract**

The present invention discloses a fan guard for a motor cooling system. The fan guard comprises a shroud having a conduit extending between a first aperture and a second aperture, the shroud having a constricting section configured to restrict airflow moving from the first aperture to the second aperture.

## Description

### Technical Field

This disclosure relates generally to the field of cooling systems for electric motors; particularly to the field of air cooling systems for electric motors; and more particularly, to the field of attenuation of emitted sound and reduction of power consumed during operation of the electric motor.

### Background

Electric motors may generate large amounts of heat as a result of the electromagnetic fields therein. The internal heat build-up may significantly reduce the efficiency of the motor, particularly in high-density power applications. Increase in heat may result in an increase in electrical resistance through the motor windings associated as temperatures rise. Thus, dissipation of heat is required for efficient operation of the motor.

Generally, air cooling systems are known for the dissipation of heat generated by electric motors. The air cooling systems comprise an axial flow fan and a fan guard that encloses the fan. The cooling system may be configured to reduce air flow turbulence so as to provide sound attenuation and reduction of power consumption.

The present disclosure is directed, at least in part, to improving or overcoming one or more aspects of the prior art system.

### Brief Summary of the Invention

In a first aspect, the present disclosure describes a fan guard for a motor cooling system. The fan guard comprises a shroud having a conduit extending between a first aperture and a second aperture, the shroud having a constricting section configured to restrict airflow moving from the first aperture to the second aperture. The fan guard fan provides for an increase in captured mass flow rate. The increased in mass flow rate provides for motor cooling.

In a second aspect, the present disclosure describes an axial flow fan for a motor cooling system. The axial flow fan comprises a hub having a rotational axis; a plurality of blades extending radially from the hub, each blade having a leading edge and a trailing edge wherein each blade has at least one flow element for reducing turbulence of air flow. The axial flow fan provides for a reduction in power consumption and a reduction in turbulence of the passing air flow. The reduction in turbulence enables a lowering of the noise level.

In a third aspect, the present disclosure describes a motor cooling system. The motor cooling system comprises an axial flow fan and/ or a fan guard.

### Brief Description of the Drawings

The foregoing and other features and advantages of the present disclosure will be more fully understood from the following description of various embodiments, when read together with the accompanying drawings, in which:
Fig. 1A is a plan view of an axial flow fan, in the first embodiment, according to the present disclosure;
Fig. 1B is an isometric view of the axial flow fan of Fig. 1A;
Fig. 1C is a side view of the axial flow fan of Fig. 1A;
Fig. 2A is a plan view of an axial flow fan, in the second embodiment, according to the present disclosure;
Fig. 2B is an isometric view of the axial flow fan of Fig. 2A;
Fig. 2C is a side view of the axial flow fan of Fig. 2A;
Fig. 3A is a plan view of an axial flow fan, in the third embodiment, according to the present disclosure;
Fig. 3B is an isometric view of the axial flow fan of Fig. 3A;
Fig. 3C is a side view of the axial flow fan of Fig. 3A;
Fig. 4A is a plan view of an axial flow fan, in the fourth embodiment, according to the present disclosure;
Fig. 4B is an isometric view of the axial flow fan of Fig. 4A;
Fig. 4C is a side view of the axial flow fan of Fig. 4A;
Fig. 5A is a plan view of an axial flow fan, in the fifth embodiment, according to the present disclosure;
Fig. 5B is an isometric view of the axial flow fan of Fig. 5A;
Fig. 5C is a side view of the axial flow fan of Fig. 5A;
Fig. 6A is an isometric view of a fan guard, in the first embodiment, according to the present disclosure;
Fig. 6B is a cross-sectional view of the fan guard of Fig. 6A;
Fig. 7A is an isometric view of a fan guard, in the second embodiment, according to the present disclosure;
Fig. 7B is a cross-sectional view of the fan guard of Fig. 7A;
Fig. 8A is an isometric view of a fan guard, in the third embodiment, according to the present disclosure;
Fig. 8B is a cross-sectional view of the fan guard of Fig. 8A;
Fig. 9A is an isometric view of a fan guard, in the fourth embodiment, according to the present disclosure;
Fig. 9B is a cross-sectional view of the fan guard of Fig. 9A; and
Fig. 10 is a schematic view of a motor cooling system according to the present disclosure.

### Detailed Description

This disclosure generally relates to an axial fan configured to reduce air flow turbulence, a fan shroud configured to increase speed of air flow and a cooling assembly with the fan positioned in the fan shroud.

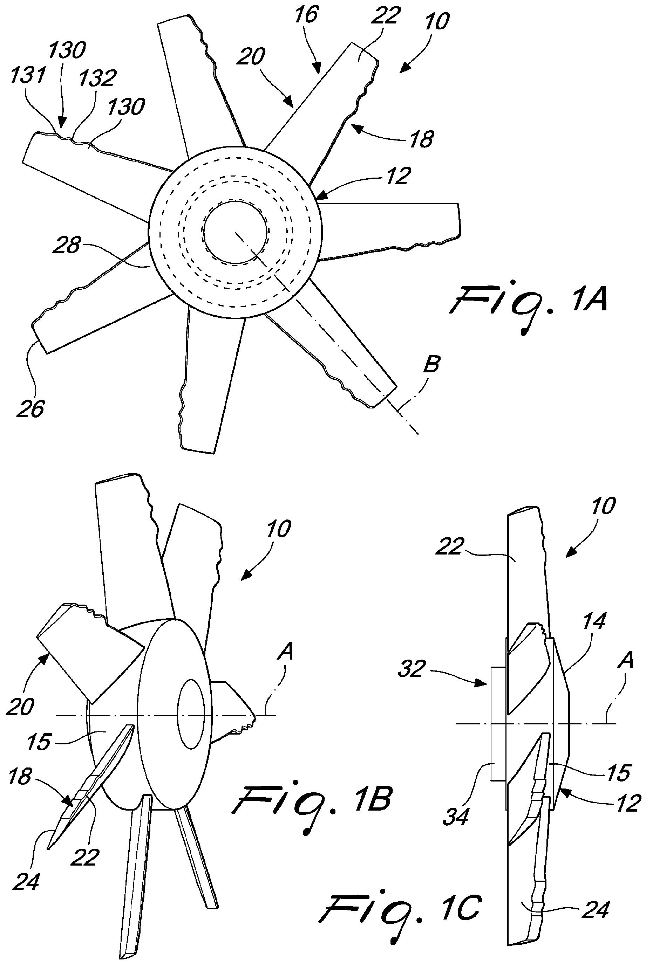

Figs. 1 to 5 show axial flow fans **10** in specific embodiments. The axial flow fan **10** has a hub **12** and a plurality of blades **16.** The hub **12** is circular and has a rotational axis **A.** Hub **12** has a front portion **14,** a rear portion **32** and a side portion **15.**

The plurality of blades **16** extend radially from the hub **12.** The plurality of blades **16** are arranged on the side portion **15** of the hub **12.** The plurality of blades **16** mutually diverge from the hub **12.** The plurality of blades **16** are mutually angularly separated along the side portion **15.** The plurality of blades **16** are substantially linear.

Each blade **16** is axially elongated along a longitudinal axis **B.** Each blade **16** has a leading edge **18** and a trailing edge **20.** The leading edge **18** is inclined relative to the trailing edge **20.** Each blade **16** has a first flow guide face **22** and a second guide flow face **24.** The first flow guide face **22** and the second guide flow face **24** connect the leading edge **18** to the trailing edge **20.** The first flow guide face **22** is convex. The second guide flow face **24** is planar. In an alternate embodiment, second guide flow face **24** has a concave curvature. In a further embodiment, second guide flow face **24** has a convex curvature. Each blade **16** has a free end **26** and a coupling end **28.** The coupling end **28** is connected to the hub **12.** Each blade is angled relative to the plane of rotation of the hub **12.** Each blade **16** has at least one flow element **130, 230, 330, 430, 530** for reducing turbulence of air flow.

Figs. 1A-1C illustrates a first embodiment of the fan **10.** The fan **10** has a hub **12** with a forward projecting front portion **14.** In an embodiment, the front portion **14** is shaped as a truncated cone. The rear portion **32** has a coupling means **34** for coupling to a rotor shaft or to a motor. The free end **26** of each blade has a convex curvature. Each blade **16** decreases in width from the coupling end **28** to the free end **26.** The first flow guide face **22** and the second guide flow face **24** each decrease in width from the coupling end **28** to the free end **26.** In an embodiment, the length of the blade **16** from the coupling end **28** to the free end **26** is greater than the diameter of the hub **14.**

The cross-section of each blade **16** is shaped as an airfoil. The blade **16** is slightly truncated on the leading edge **18.** The first flow guide face **22** and the second guide flow face **24** are contiguous at the trailing edge **20.** The first flow guide face **22** is spaced from the second guide flow face **24** at the trailing edge **20.** The transverse height of the leading edge **18** is greater than the transverse height of the trailing edge **20**

The at least one flow element **130** is positioned at the leading edge **18.** The at least one flow element **130** is a plurality of crests **130.** The plurality of crests **130** project from the blade **16.** The plurality of crests **130** project from the blade **10** in a direction substantially transverse to axial extension of the blade **16.** The plurality of crests **130** project from the blade **16** in a direction substantially transverse to the longitudinal axis **B.** The plurality of crests **130** are arranged in a row. In an embodiment, the plurality of crests **130** are mutually spaced. A plurality of troughs **132** are interposed between the plurality of crests **130.** In a further embodiment, the depth of each trough **132** reaches the level of the leading edge **18** not having the crests **130.** In an embodiment, each trough **132** may be mutually aligned so as to define the leading edge **18** or a portion thereof. In an embodiment, the plurality of crests **130** are identical. In an alternate embodiment, the crests **130** are varied. The crests **130** may be smaller from the coupling end **28** to the free end **26.** The troughs **132** may be wider from the coupling end **28** to the free end **26.** The troughs **132** may increase in depth from the coupling end **28** to the free end **26.**

In an embodiment, the plurality of crests **130** are positioned adjacent the free end **26** and spaced from the coupling end **28** of the blade **16.** The leading edge **18** is linear from the plurality of crests **130** to the coupling end **28.** In a further embodiment, the plurality of crests **130** are positioned adjacent the coupling end **28** and spaced from the free end **26.** The leading edge **18** is linear from the free end **26** to the plurality of crests **130.** In yet a further embodiment, the plurality of crests **130** are spaced from coupling end **28** and spaced from the free end **26.** The leading edge **18** is linear from the plurality of crests **130** to the coupling end **28** and to the free end **26.**

In an embodiment, each crest **130** extends transversely across the leading edge **18** from the first flow guide face **22** to the second guide flow face **24.** In alternate embodiment, each crest **130** partially extends transversely on the leading edge **18** from the first flow guide face **22** towards the second guide flow face **24.** In a further alternate embodiment, each crest **130** partially extends transversely on the leading edge **18** from the second guide flow face **24** towards the first flow guide face **22.** In a further embodiment, each crest **130** is positioned on the leading edge **18** at the interface of the first flow guide face **22** and the leading edge **18.** In yet a further embodiment, each crest **130** is positioned on the leading edge **18** at the interface of the second flow guide face **24** and the leading edge **18.**

In an embodiment, each crest **130** has a uniform thickness from the first flow guide face **22** and the second guide flow face **24** to a peak **131** of the crest **130.** In an alternate embodiment, each crest **130** has an increasing thickness from the first flow guide face **22** and the second guide flow face **24** to the peak **131** of the crest **130.** In a further alternate embodiment, each crest **130** has a decreasing thickness from the first flow guide face **22** and the second guide flow face **24** to the peak **131** of the crest **130.** In an embodiment, the peaks **131** of each crest **130** may be mutually equal in relation to the thickness and height.

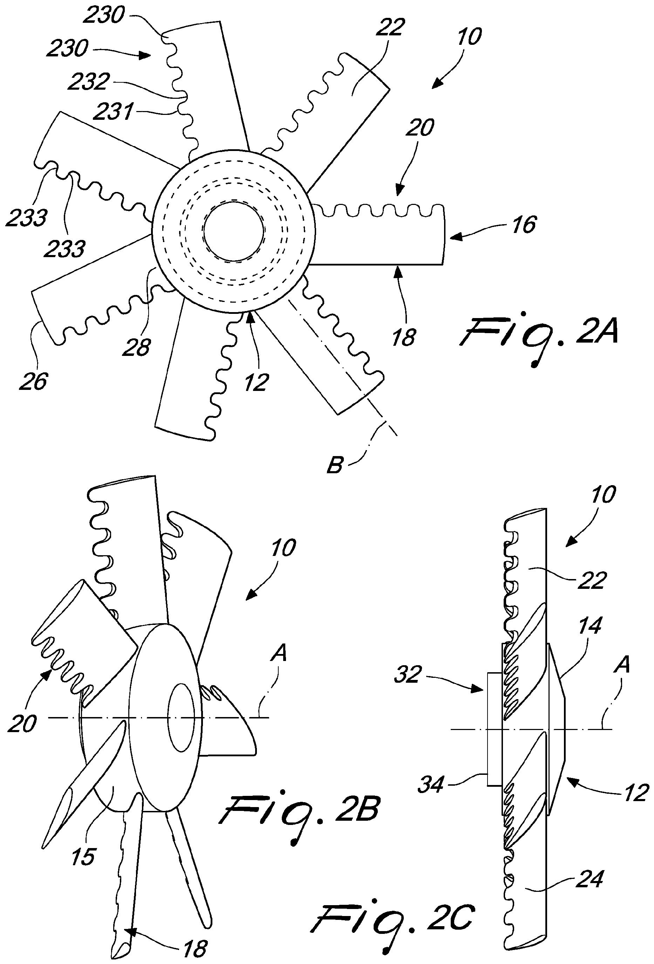

Figs. 2A-2C illustrates a second embodiment of the fan **10.** The fan **10** has a hub **12** with a forward projecting front portion **14.** The forward portion **14** is shaped as a truncated cone. The rear portion **32** has a coupling means **34** for coupling to a rotor shaft or a motor. The free end **26** of each blade has a convex curvature. The free end **26** is concentric with the side portion **15** of the hub **12.** Each blade **16** has a substantially constant width from the coupling end **28** to the free end **26.** The leading edge **18** is substantially parallel to the trailing edge **20.** The first flow guide face **22** and the second guide flow face **24** are each substantially constant in width from the coupling end **28** to the free end **26.** In an embodiment, the length of the blade **16** from the coupling end **28** to the free end **26** has a greater magnitude than the diameter of the hub **12.**

The cross-section of each blade **16** is shaped as an airfoil. The first flow guide face **22** and the second guide flow face **24** are contiguous at the leading edge **18.** The first flow guide face **22** and the second guide flow face **24** are contiguous at the trailing edge **20.**

The at least one flow element **230** is positioned at the trailing edge **20.** The at least one flow element **230** are teeth **230.** The teeth **230** project from the blade **16.** The teeth **230** project from the blade **16** in a direction substantially transverse to axial extension of the blade **16.** The free ends **231** of each tooth **230** lie on a plane that is parallel to the leading edge **18.** In an embodiment, the tips of each free end **231** may be mutually aligned so as to define the trailing edge **20** or a portion thereof. The teeth **230** project from the blade **16** in a direction substantially transverse to the longitudinal axis **B.** The teeth are arranged in a row. In an embodiment, the teeth **230** are mutually spaced. A plurality of troughs **232** are interposed between the teeth **230.** In a further embodiment, the depth of each trough **232** reaches the level of the trailing edge **20** not having the teeth **230.** In an embodiment, the teeth **230** are identical.

In an embodiment, the depth of the troughs **232** may vary from the coupling end **28** to the free end **26.** The depth of the troughs **232** may increase from the coupling end **28** to the free end **26.** In an further embodiment, the spacing between each pair of teeth **230** may vary. The spacing between each pair of teeth **230** may increase from the coupling end **28** to the free end **26.** Alternatively, the spacing between each pair of teeth **230** may decrease from the coupling end **28** to the free end **26.**

In an embodiment, the row of the teeth **230** extend from the free end **26** to the coupling end **28.** In alternate embodiment, the row of teeth **230** are positioned adjacent the free end **26** and spaced from the coupling end **28** of the blade **16.** The trailing edge **20** is linear from the row of teeth **230** to the coupling end **28.** In a further embodiment, the row of teeth **230** are positioned adjacent the coupling end **28** and spaced from the free end **26.** The trailing edge **20** is linear from the free end **26** to the row of teeth **230.** In yet a further embodiment, the row teeth **230** are spaced from coupling end **28** and spaced from the free end **26.** The trailing edge **20** is linear from the row of teeth **230** to the coupling end **28** and from the row of teeth **230** to the free end **26.**

The free end **231** of each tooth **230** is rounded. The sides **233** of each tooth **230** may be mutually parallel. The width of each tooth **230** may be substantially constant from the first flow guide face **22** and the second guide flow face **24** to the free end **231.** In an embodiment, the width of each tooth **230** may substantially decrease from the first flow guide face **22** and the second guide flow face **24** to the free end **231.** In an embodiment, each tooth **230** has a decreasing thickness from the first flow guide face **22** and the second guide flow face **24** to the free end **231.** In an alternate embodiment, each tooth **230** has a uniform thickness from the first flow guide face **22** and the second guide flow face **24** to the free end **231.**

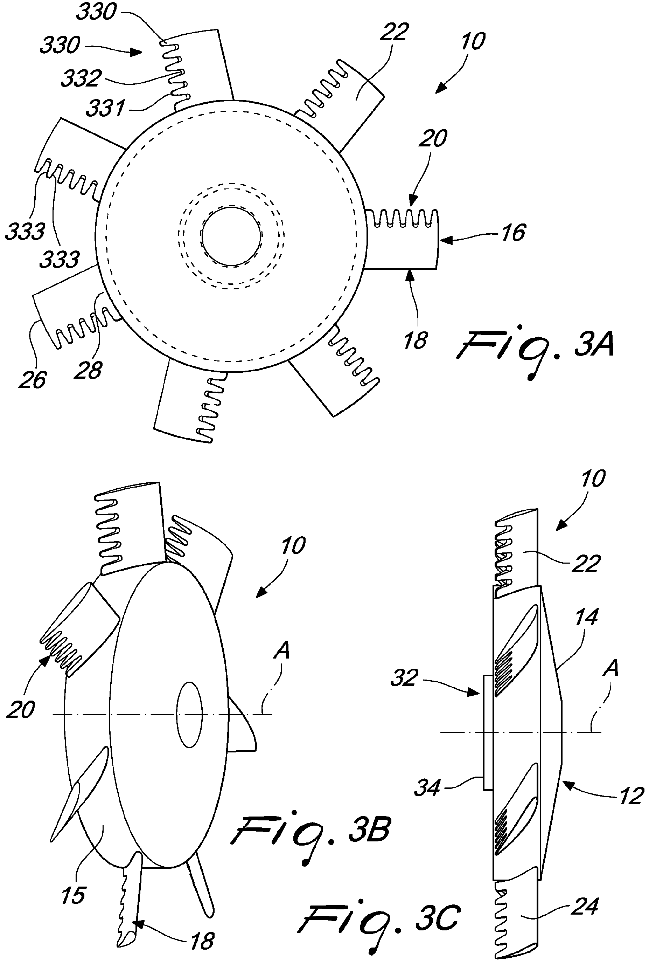

Figs. 3A-3C illustrates a third embodiment of the fan **10.** The fan **10** has a hub **12** with a forward projecting front portion **14.** The forward portion **14** is shaped as a truncated cone. The rear portion **32** has a coupling means **34** for coupling to a rotor shaft or a motor. The free end **26** of each blade has a convex curvature. The free end **26** is concentric with the side portion **15** of the hub **14.** Each blade **16** has a substantially constant width from the coupling end **28** to the free end **26.** The leading edge **18** is substantially parallel to the trailing edge **20.** The first flow guide face **22** and the second guide flow face **24** are each substantially constant in width from the coupling end **28** to the free end **26.** In an embodiment, the length of the blade **16** from the coupling end **28** to the free end **26** has a lesser magnitude than the diameter of the hub **12.**

The cross-section of each blade **16** is shaped as an airfoil. The first flow guide face **22** and the second guide flow face **24** are contiguous at the leading edge **18.** The first flow guide face **22** and the second guide flow face **24** are contiguous at the trailing edge **20.**

The at least one flow element **330** is positioned at the trailing edge **20.** The at least one flow element **330** are teeth **330.** The teeth **330** project from the blade **16.** The teeth **330** project from the blade **16** in a direction substantially transverse to axial extension of the blade **16.** The free ends **331** of each tooth **330** lie on a plane that is parallel to the leading edge **18.** In an embodiment, the tips of each free end **331** may be mutually aligned so as to define the trailing edge **20** or a portion thereof. The teeth **330** project from the blade **16** in a direction substantially transverse to the longitudinal axis **B.** The teeth **330** are arranged in a row. In an embodiment, the teeth **330** are mutually spaced. A plurality of troughs **332** are interposed between the teeth **330.** In a further embodiment, the depth of each trough **332** reaches the level of the trailing edge **20** not having the teeth **330.** In an embodiment, the teeth **330** are identical.

In an embodiment, the teeth **330** extend from the free end **26** to the coupling end **28.** In alternate embodiment, the teeth **330** are positioned adjacent the free end **26** and spaced from the coupling end **28** of the blade **16.** The trailing edge **20** is linear from the row of teeth **330** to the coupling end **28.** In a further embodiment, the teeth **330** are positioned adjacent the coupling end **28** and spaced from the free end **26.** The trailing edge **20** is linear from the free end **26** to the row of teeth **330.** In yet a further embodiment, the teeth **330** are spaced from coupling end **28** and spaced from the free end **26.** The trailing edge **20** is linear from the row of teeth **330** to the coupling end **28** and from the row of teeth **330** to the free end **26.**

The free end **331** of each tooth **330** is pointed. In an embodiment, the free end **331** of each tooth **330** is rounded. The sides **233** of each tooth **230** may be mutually inclined. The width of each tooth **330** may decrease from the first flow guide face **22** and the second guide flow face **24** to the free end **331.** In an embodiment, each tooth **330** has a decreasing thickness from the first flow guide face **22** and the second guide flow face **24** to the free end **331.** In an alternate embodiment, each tooth **330** has a uniform thickness from the first flow guide face **22** and the second guide flow face **24** to the free end **331.**

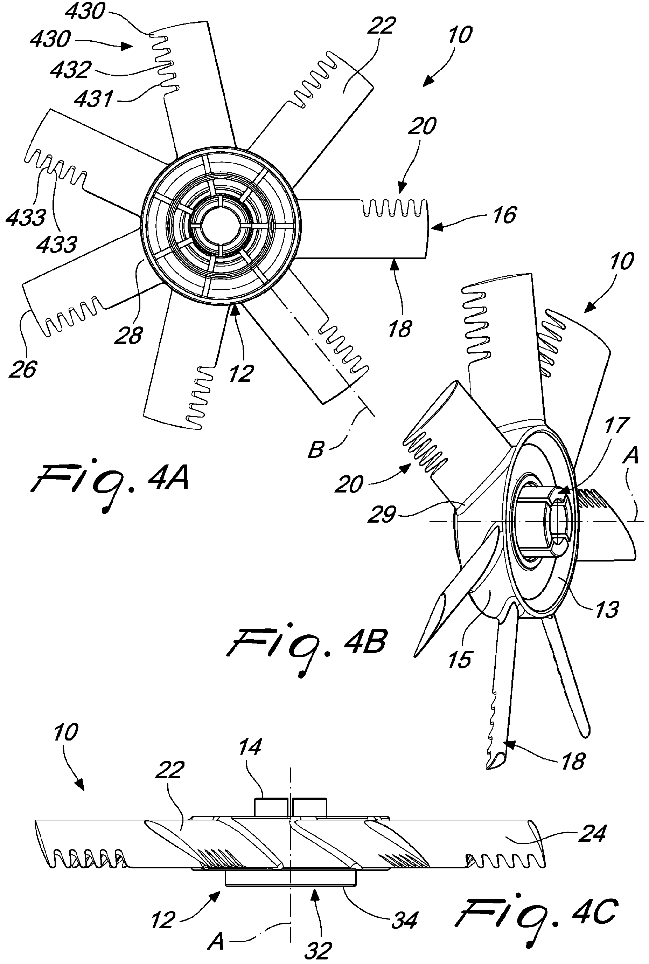

Figs. 4A-4C illustrates a fourth embodiment of the fan **10.** The fan **10** has a hub **12** with a front portion **14** having a cavity **13.** The cavity **13** is enclosed by the side portion **15.** The forward portion **14** has a connecting means **17.** The connecting means **17** enables the fan to be connected to the motor shaft (not shown). The connecting means **17** extends centrally and is concentric with the side portion **15.** The rear portion **32** has a coupling means **34** for coupling to a rotor shaft or a motor.

The free end **26** of each blade has a convex curvature. The free end **26** is concentric with the side portion **15** of the hub **14.** Each blade **16** has a substantially constant width from the coupling end **28** to the free end **26.** The leading edge **18** is substantially parallel to the trailing edge **20.** The first flow guide face **22** and the second guide flow face **24** are each substantially constant in width from the coupling end **28** to the free end **26.** In an embodiment, the length of the blade **16** from the coupling end **28** to the free end **26** has a greater magnitude than the diameter of the hub **14.** In an embodiment, the coupling end **28** of each blade **16** has a reinforcement **29** to strengthen the coupling of the blade **16** to the hub **12.**

The cross-section of each blade **16** is shaped as an airfoil. The first flow guide face **22** and the second guide flow face **24** are contiguous at the leading edge **18.** The first flow guide face **22** and the second guide flow face **24** are contiguous at the trailing edge **20.**

The at least one flow element **430** is positioned at the trailing edge **20.** The at least one flow element **430** are teeth **430.** The teeth **430** project from the blade **16.** The teeth **430** project from the blade **16** in a direction substantially transverse to axial extension of the blade **16.** The free ends **431** of each tooth **430** lie on a plane that is parallel to the leading edge **18.** In an embodiment, the tips of each free end **431** may be mutually aligned so as to define the trailing edge **20** or a portion thereof. The teeth **430** project from the blade **16** in a direction substantially transverse to the longitudinal axis **B.** The teeth **430** are arranged in a row. In an embodiment, the teeth **430** are mutually spaced. A plurality of troughs **432** are interposed between the teeth **430.** In an embodiment, the teeth **430** are identical.

In an embodiment, the depth of the troughs **432** may vary from the coupling end **28** to the free end **26.** The depth of the troughs **432** may increase from the coupling end **28** to the free end **26.** In an further embodiment, the spacing between each pair of teeth **430** may vary. The spacing between each pair of teeth **430** may increase from the coupling end **28** to the free end **26.** Alternatively, the spacing between each pair of teeth **430** may decrease from the coupling end **28** to the free end **26.**

In an embodiment, the teeth **430** are positioned adjacent the free end **26** and spaced from the coupling end **28** of the blade **16.** The trailing edge **20** is linear from the row of teeth **430** to the coupling end **28.** In alternate embodiment, the teeth **430** extend from the free end **26** to the coupling end **28.** In a further embodiment, the teeth **430** are positioned adjacent the coupling end **28** and spaced from the free end **26.** The trailing edge **20** is linear from the free end **26** to the row of teeth **430.** In yet a further embodiment, the teeth **430** are spaced from coupling end **28** and spaced from the free end **26.** The trailing edge **20** is linear from the row of teeth **430** to the coupling end **28** and to the free end **26.**

The free end **431** of each tooth **430** is pointed. In an embodiment, the free end **431** of each tooth **430** is rounded. The sides **433** of each tooth **430** may be mutually inclined. The width of each tooth **430** may decrease from the first flow guide face **22** and the second guide flow face **24** to the free end **431.** In an embodiment, the width of each tooth **430** may substantially decrease from the first flow guide face **22** and the second guide flow face **24** to the free end **431.** In an embodiment, each tooth **430** has a decreasing thickness from the first flow guide face **22** and the second guide flow face **24** to the free end **431.** In an alternate embodiment, each tooth **430** has a uniform thickness from the blade **16** to the free end **431.**

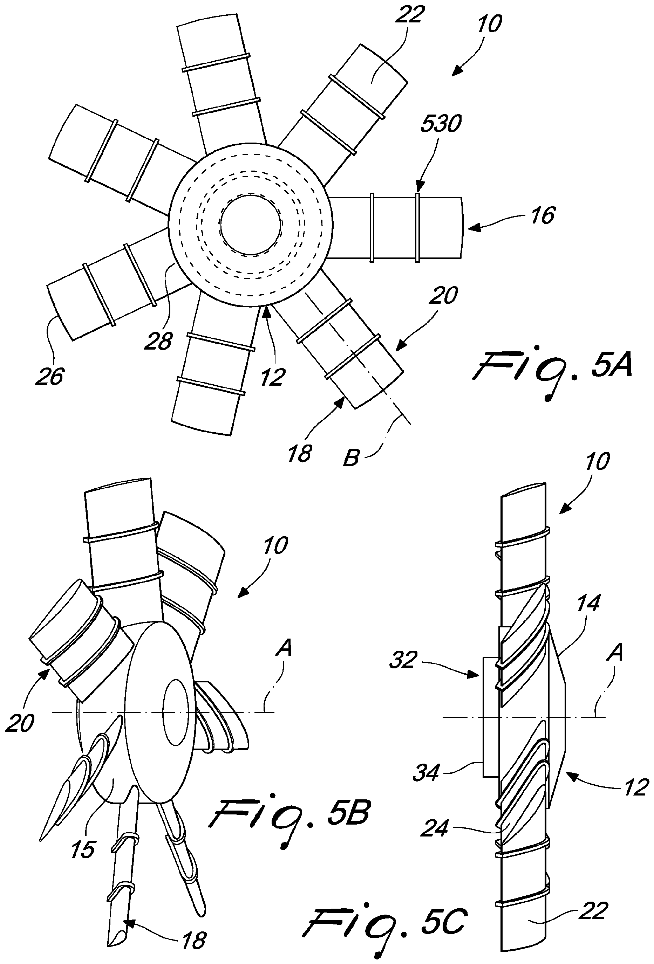

Figs. 5A-5C illustrates a fifth embodiment of the fan **10.** The fan **10** has a hub **12** with a forward projecting front portion **14.** The forward portion **14** is shaped as a truncated cone. The rear portion **32** has a coupling means **34** for coupling to a rotor shaft or a motor. The free end **26** of each blade has a convex curvature. The free end **26** is concentric with the side portion **15** of the hub **14.** Each blade **16** has a substantially constant width from the coupling end **28** to the free end **26.** The leading edge **18** is substantially parallel to the trailing edge **20.** The first flow guide face **22** and the second guide flow face **24** are each substantially constant in width from the coupling end **28** to the free end **26.** In an embodiment, the length of the blade **16** from the coupling end **28** to the free end **26** has a greater magnitude than the diameter of the hub **14.**

The cross-section of each blade **16** is shaped as an airfoil. The first flow guide face **22** and the second guide flow face **24** are contiguous at the leading edge **18.** The first flow guide face **22** and the second guide flow face **24** are contiguous at the trailing edge **20.**

The at least one flow element **530** extends transversely across the blade **16.** The at least one flow element **530** is a rib **530** extending transversely across each blade **16.** Rib **530** is a raised structure positioned on the blade **16.**

Rib **530** extends substantially perpendicular to the longitudinal axis **B.** The rib **530** encircles the blade **16.** The rib **530** extends across the first flow guide face **22** and substantially extends transversely on the first flow guide face **22.** Rib **530** follows convex curvature of the first flow guide face **22.** The rib **530** extends across the second guide flow face **24** and substantially extends transversely on the second guide flow face **24.** Rib **530** follows the planar form of the second flow guide face **24.** In an embodiment, rib **530** follows concave curvature of the second guide flow face **24.**

Rib **530** extends across the leading edge **18.** Rib is curved at the leading edge **18.** Rib **530** extends across the trailing edge **20.** In an embodiment, rib **530** is linear at the trailing edge **20.** In alternate embodiment, rib **530** is curved at the trailing edge **20**

In an embodiment, the blade **16** has two ribs **530.** A first rib **530** is spaced from a second rib **530.** The first rib **530** is positioned proximate to the side portion **15** and distal to the free end **26.** The second rib **530** is positioned distal to the side portion **15** and proximate to the free end **26.** In an alternate embodiment, the blade has a single rib **530.** The rib **530** is positioned centrally on the blade **16.** The rib is **530** equidistant from the side portion **15** and the free end **26.**

The features of the specific embodiments of the fans **10** may be combined. In particular, the fan **10** may have a combination of the flow elements **130, 230, 330, 430, 530** provided on the plurality of blades **16.** The plurality of crests **130** may be combined with the rib **530.** The plurality of crests **130** may be combined with one of the teeth **230, 330, 430.** The plurality of crests **130** may be combined with the rib **530** and one of the teeth **230, 330, 430.** The rib **530** may be combined with one of the teeth **230, 330, 430.**

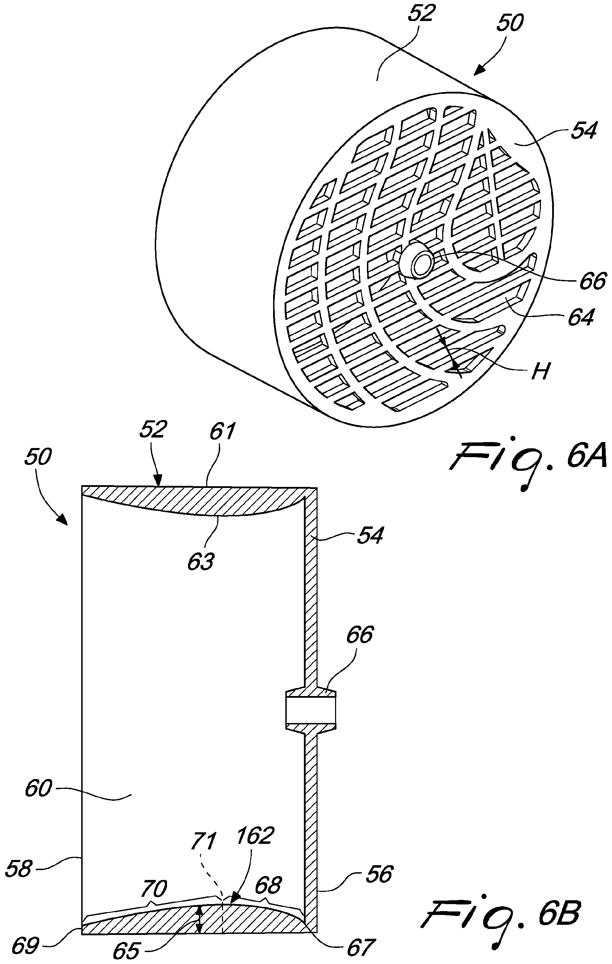

Figs. 6 to 9 show fan guard **50** in specific embodiments. The fan guard **50** is configured to accommodate the fan **10.** The fan guard **50** has a shroud **52** and a grid cover **54.** Shroud **52** enables air to be channelled therethrough. The shroud **52** is elongated. In an embodiment, the shroud **52** is cylindrical. Shroud **52** has a first aperture **56** and a second aperture **58.** In an embodiment, air may enter into the shroud **52** through the first aperture **56** and exit the shroud **52** through the second aperture **58.** In an alternate embodiment, air may enter into the body **52** through the second aperture **58** and exit the body **52** through the first aperture **56.** Shroud **52** has an external wall **61** and an internal wall **63.** The internal wall **63** is concentric to the external wall **61.**

Shroud **52** has a conduit **60.** The conduit **60** is defined by an internal wall **63** of the shroud **52.** Conduit **60** extends between the first aperture **56** and the second aperture **58.** In an embodiment, conduit **60** has a circular cross section. The shroud **52** has a constricting section **162, 262, 362, 462.** In an embodiment, the constricting section **162, 262, 362, 462** is configured to restrict airflow moving from the first aperture **56** to the second aperture **58.** In an alternate embodiment, the constricting section **162, 262, 362, 462** is configured to restrict airflow moving from the second aperture **58** to the first aperture **56**

In an embodiment, the constricting section **162, 262, 362, 462** has a reduced diameter relative to a diameter of the rest of the conduit **60.** In an alternative embodiment, the constricting section **162, 262, 362, 462** has a greater diameter relative to a diameter of the rest of the conduit **60.**

The grid cover **54** is positioned in the shroud **52.** In an embodiment, the grid cover **54** is positioned between the first and second apertures **56, 58.** The grid cover **54** has air flow openings **64** for flow of air into the shroud **52.** In an embodiment, the air flow openings **64** have a **H** equal to, or below, the limit imposed by Standard(s)-IEC 60335-1:2001. The grid cover **54** has a nose **66** for providing a spacer for the fan **10.** The nose **66** is positioned in the center of the grid cover **54.**

Figs. 6A - 6B illustrate a first embodiment of the fan guard **50.** Constricting section **162** is positioned in the conduit **60.** Constricting section **162** is an annular protuberance **63** configured to initially decrease the diameter of the conduit **60** and subsequently increase the diameter of the conduit **60.** The protuberance may be hump shaped. The protruberance is a reverse semi-airfoil. The constricting section **162** projects into the conduit **60.** In an embodiment, the constricting section **162** is a projection of the internal wall **63** of the shroud **52** into the conduit **60.** In an alternate embodiment, the constricting section **162** is a body that is mounted to the internal wall **63** of the shroud **52.**

The constricting section **162** has a first portion **68** and a second portion **70.** The first and second portions **68, 70** are contiguous. The first portion **68** has an increasing radial length **65.** The first portion **68** increases in radial length **65** from a first end **67** to an apex **71.** The second portion **70** has a decreasing radial length **65.** The second portion **70** decreases in radial length **65** from the apex **71** to a second end **69.** The radial length **65** is the distance from the internal wall **63** to the external wall **61.** In the embodiment of a mounted constricting section **162** the radial length is a distance from the external wall **61** to the surface of the mounted constricting section **162** projecting into the conduit **60.**

With reference to the airflow path from the first aperture **56** to the second aperture **58,** the conduit **60** decreases in diameter along the first portion **68** from the first end **67** to the apex **71** of the constricting section **162.** The conduit **60** increases in diameter along the second portion **68** from the apex **71** to the second end **69** of the constricting section **162.**

In an embodiment, the constricting section **162** is positioned between the first aperture **56** and the second aperture **58.** The constricting section **162** may be spaced from the first aperture **56** and the second aperture **58.** The constricting section **162** may be positioned such that the first or the second end **67, 69** is adjacent the first or the second aperture **56, 58.** The first aperture **56** has substantially the same diameter relative to the diameter of the second aperture **58.**

In an embodiment, the constricting section **162** is positioned between the grid cover **54** and the second aperture **58.** The grid cover **54** is positioned at the first aperture **56.** The first end **67** of the constricting section **162** is spaced from the first aperture **56.** The second end **69** of the constricting section **162** is positioned at the second aperture **58.** In an alternate embodiment, the constricting section **162** is positioned between the grid cover **54** and the first aperture **56.** The first end **67** of the constricting section **162** is positioned at the first aperture **56.**

The first portion **68** has a reduced axial length relative to the second portion **70** with respect to the longitudinal axis of the shroud **52.** The first portion **68** has a higher degree of curvature relative to the second portion **70.** The increased curvature serves to generate a depression in the area of the second portion **70,** having the lesser curvature, so as increase suction in the shroud **52.**

In an embodiment, at the second portion, the internal wall **63** is inclined relative to the external wall **61** by an angle of about 5 degrees. The inclination angle promote pressure recovery and avoid separation of air flow.

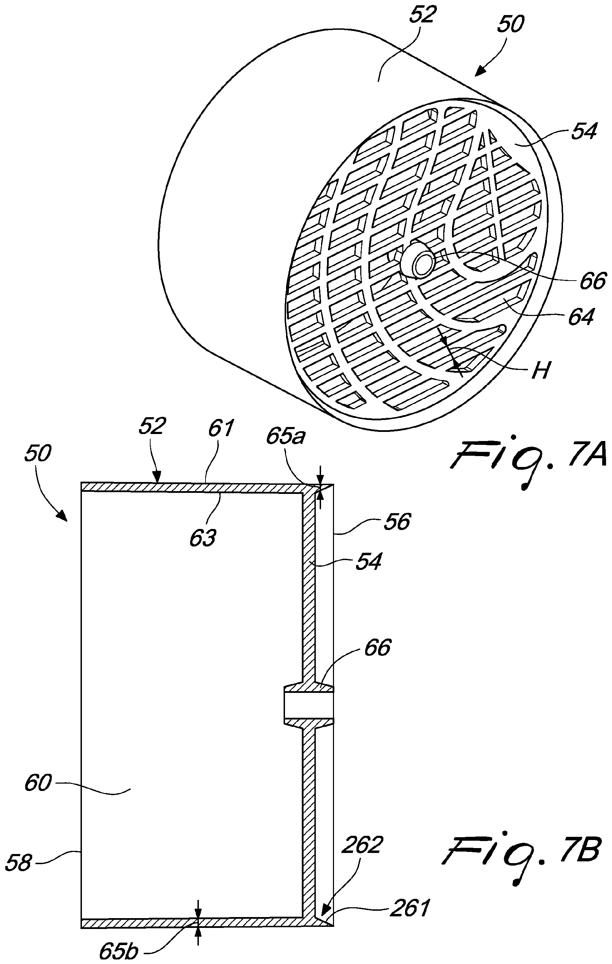

Figs. 7A - 7B illustrate a second embodiment of the fan guard **50.** Constricting section **262** is positioned in the conduit **60.** The constricting section **262** is positioned adjacent the first aperture **56.** Constricting section **262** extends from the first aperture **56** to an end of the internal wall **63.** Constricting section **262** is an annular inclined surface **261** configured to decrease the diameter of the conduit **60** along the constricting section **262** up to a constant diameter. The conduit **60** has a constant diameter along the internal wall **63.** In an embodiment, the constricting section **262** is contiguous with the first aperture **56.** The first aperture **56** has substantially the same diameter relative to the diameter of the second aperture **58.**

The annular inclined surface **261** of the constricting section **262** is inclined relative to the internal wall **63** of the shroud **52.** The annular inclined surface **261** constricting section **262** is inclined relative to the external wall **61.** The constricting section **262** has an increasing radial length **65a** from the first aperture **56** to a constant radial length **65b.** The constricting section **262** has an increasing radial length **65** from the first aperture **56** to the internal wall **63.** The radial length **65** along the internal wall **63** is substantially constant. With reference to the airflow path from the first aperture **56** to the second aperture **58,** the conduit **60** decreases in diameter along the constricting section **262** from the first aperture **56** to the internal wall **63.**

In an embodiment, the grid cover **54** is interposed between the internal wall **63** and the constricting section **262.** The constricting section **262** is positioned between the first aperture **56** and the grid cover **54.** The constricting section **262** has an increasing radial length **65** from the first aperture **56** to the grid cover **54.** The conduit **60** decreases in diameter along the constricting section **262** from the first aperture **56** to the grid cover **54.** The conduit **60** has a substantially constant diameter from the grid cover **54** to the second aperture **58.**

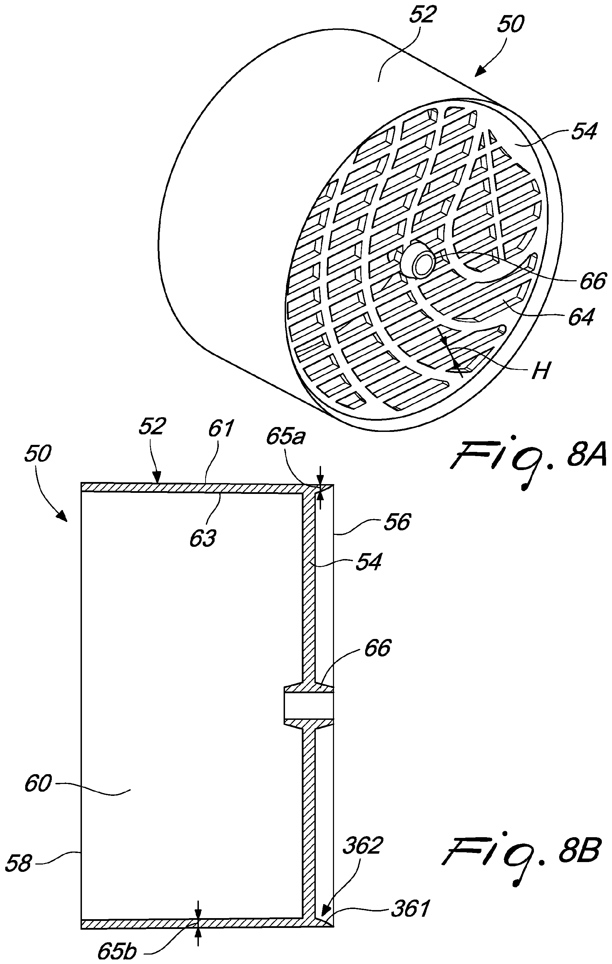

Figs. 8A - 8B illustrate a third embodiment of the fan guard **50.** Constricting section **362** is positioned in the conduit **60.** The constricting section **362** is positioned adjacent the first aperture **56.** Constricting section **362** extends from the first aperture **56** to the internal wall **63.** Constricting section **362** is an annular curved surface **361** configured to decrease the diameter of the conduit **60** along the constricting section **362** up to a constant diameter. The conduit **60** has a constant diameter along the internal wall **63.** In an embodiment, the constricting section **362** is contiguous with the first aperture **56.** The first aperture **56** has substantially the same diameter relative to the diameter of the second aperture **58.**

The constricting section **362** is an annular curved surface **361** with a convex curvature. The annular curved surface **361** faces into the conduit **60.** The constricting section **362** has an increasing radial length **65a** from the first aperture **56** to a constant radial length **65b.** The constricting section **362** has an increasing radial length **65** from the first aperture **56** to the internal wall **63.** The radial length **65** along the internal wall **63** is substantially constant. With reference to the airflow path from the first aperture **56** to the second aperture **58,** the conduit **60** decreases in diameter along the constricting section **362** from the first aperture **56** to the internal wall **63.**

In an embodiment, the grid cover **54** is interposed between the internal wall **63** and the constricting section **362.** The constricting section **362** is positioned between the first aperture **56** and the grid cover **54.** The constricting section **362** has an increasing radial length **65** from the first aperture **56** to the grid cover **54.** The conduit **60** decreases in diameter along the constricting section **362** from the first aperture **56** to the grid cover **54.** The conduit **60** has a substantially constant diameter from the grid cover **54** to the second aperture **58.**

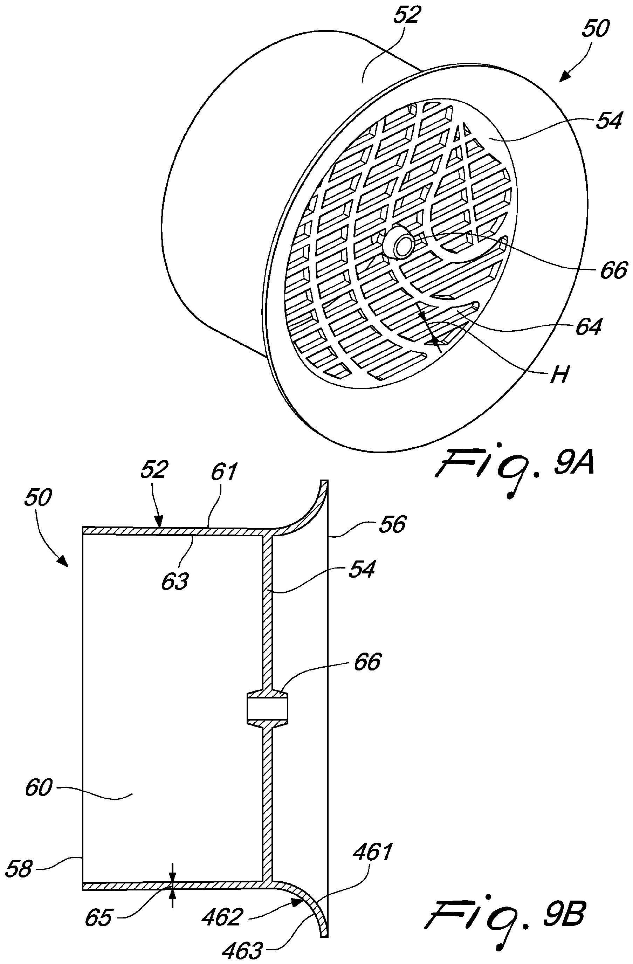

Figs. 9A - 9B illustrate a fourth embodiment of the fan guard **50.** The constricting section **462** is an extension of the shroud **52.** The constricting section **462** is an outwardly flared extension. Constricting section **462** has an internal flared surface **461** and an external flared surface **463.** The internal flared surface **461** and the external flared surface **463** are mutually parallel. The constricting section **462** has a constant radial length **65.** Constricting section **462** is horn-shaped.

Constricting section **462** extends from the first aperture **56** to an end of the internal wall **63.** The conduit **60** decreases in diameter from the first aperture **56** along the constricting section **462** up to a constant diameter. The conduit **60** has a constant diameter along the internal wall **63.** In an embodiment, the constricting section **462** is contiguous with the first aperture **56.** The first aperture **56** has a greater diameter relative to the diameter of the second aperture **58.** First aperture **56** has a greater diameter relative to the diameter of the conduit **60** along the internal wall **63.** With reference to the airflow path from the first aperture **56** to the second aperture **58,** the conduit **60** decreases in diameter along the constricting section **462** from the first aperture **56** to the internal wall **63.**

In an embodiment, the grid cover **54** is interposed between the internal wall **63** and the constricting section **462.** The constricting section **462** is positioned between the first aperture **56** and the grid cover **54.** The constricting section **462** has a constant radial length **65** from the first aperture **56** to the grid cover **54.** The conduit **60** decreases in diameter along the constricting section **462** from the first aperture **56** to the grid cover **54.** The conduit **60** has a substantially constant diameter from the grid cover **54** to the second aperture **58.**

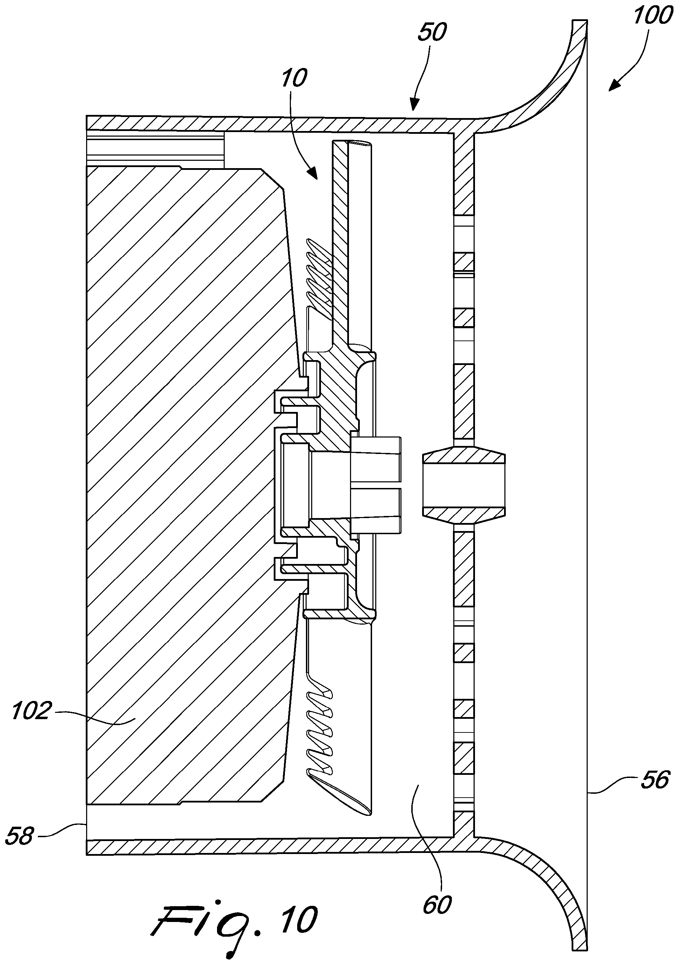

Fig. 10 illustrates a motor cooling assembly **100.** The motor cooling assembly **100** comprises the axial flow fan **10.** The axial flow fan **10** in encompassed in a known fan guard **50.** The motor cooling assembly **100** comprises the fan guard **50.** The fan guard **50** encompasses a known axial flown fan **10.**

The motor cooling assembly **100** comprises the axial flow fan **10** and the fan guard **50.** The axial flow fan **10** is positioned in the conduit **60.** The axial flow fan **10** is positioned between the first and the second aperture **56, 58.** In an embodiment, the axial flow fan **10** is positioned in the conduit **60** between the grid cover **54** and the second aperture **58.** The axial flow fan **10** is positioned to draw air into the conduit **60** from the first aperture **56.** The fan assembly **100** further comprises a motor **102.** The axial flow fan **10** is mounted to the motor **102.** In an embodiment, the motor is an electric motor. The electric motor may be provided with a variable frequency drive.

The skilled person would appreciate that foregoing embodiments may be modified or combined to obtain the fan **10,** fan guard **50** and the fan assembly **100** of the present disclosure.

### Industrial Applicability

This disclosure describes an axial flow fan **10** and a fan guard **50.** The axial flow fan **10** having blades **16** that are configured to reduce turbulence in the flow of air. The reduction of turbulence enables for a reduction of sound being emitted from the cooling system. The fan guard **50** has a constriction section that enables an increase of the flow rate between the first and the second apertures. The increase in flow rate is coupled with the reduction in turbulence. Head losses is minimized in the fan guard **50** thereby reducing energy losses.

The cover **54** of the fan guard **50** has a grid with air flow openings **64** that are aligned with the rotation of the air flow generated by the axial flow fan **10.**

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A fan guard (50) for a motor cooling system, the fan guard (50) comprising:
a shroud (52) having a conduit (60) extending between a first aperture (56) and a second aperture (58), the shroud (52) having a constricting section (162, 262, 362, 462) configured to restrict airflow moving from the first aperture (56) to the second aperture (58).

2. The fan guard (50) of claim 1 wherein the constricting section (162) is positioned in the conduit (60), the constricting section (162) being an annular protuberance having a first portion (68) with an increasing radial length (65) and a second portion (70) with a decreasing radial height (65) wherein the first and second portions are contiguous (68, 70).

3. The fan guard (50) of claim 1 wherein the constricting section (262, 362) is positioned in the conduit (60) adjacent the first aperture (56), the constricting section (262, 362) having an increasing radial length (65) from the first aperture (56) to an internal wall (63) of the shroud (52).

4. The fan guard (50) of claim 2 wherein the constricting section (262) is an annular inclined surface, the annular inclined surface being inclined relative to the internal wall (63) of the shroud (52).

5. The fan guard (50) of claim 3 wherein the constricting section (362) is an annular convex surface, the annular convex surface facing the conduit (60).

6. The fan guard (50) of claims 4 or 5 wherein the constricting section (262, 362) is contiguous with the first aperture (56).

7. The fan guard (50) of claim 1 wherein the constricting section (462) is an outwardly flared projection extending from the shroud (52).

8. An axial flow fan (10) for a motor cooling system, the axial flow fan (10) comprising:
a hub (12) having a rotational axis (A);
a plurality of blades (16) extending radially from the hub (12), each blade (16) having a leading edge (18) and a trailing edge (20) wherein each blade (16) has at least one flow element (130, 230, 330, 430, 530) for reducing turbulence of air flow.

9. The axial flow fan (10) of claim 8 wherein the element (130) is a plurality crests (130) positioned at the leading edge (18).

10. The axial flow fan (10) of claims 8 or 9 wherein the flow element (230, 330, 430) is a plurality of teeth positioned at the trailing edge (20).

11. The axial flow fan (10) of claims 8, 9 or 10 of wherein the flow element (530) is a rib (530) extending transversely across each blade (16).

12. The axial flow fan (10) of claim 11 wherein the rib (530) encircles the blade (16).

13. The axial flow fan (10) of claims 11 or 12 wherein the rib (530) is curved at the leading edge (18) and is linear at the trailing edge (20).

14. A motor cooling system (100) comprising:
an axial flow fan (10) of any one of claims 8 to 13; and/or
a fan guard (50) of anyone of claims 1 to 7.

15. The motor cooling system (100) wherein the axial flow fan (10) is positioned in the fan guard (50) and wherein the axial flow fan (10) is mounted to a motor.

## Amended claims

### Amended claims in accordance with Rule 137(2) EPC.

1. A motor cooling system (100) comprising:
an axial flow fan (10) comprising:
a hub (12) having a rotational axis (A);
a plurality of blades (16) extending radially from the hub (12), each blade (16) having a leading edge (18) and a trailing edge (20) wherein each blade (16) has at least one flow element (130, 230, 330, 430, 530) for reducing turbulence of air flow and wherein the at least one flow element (130, 230, 330, 430, 530) is selected from the group consisting of: a plurality crests (130) positioned at the leading edge (18), a plurality of teeth positioned at the trailing edge (20) and a rib (530) extending transversely across each blade (16); and
a fan guard (50) comprising a shroud (52) having a conduit (60) extending between a first aperture (56) and a second aperture (58), the shroud (52) having a constricting section (162, 262, 362, 462) configured to restrict airflow moving from the first aperture (56) to the second aperture (58).

2. The motor cooling system (100) of claim 1 wherein the constricting section (162) is positioned in the conduit (60), the constricting section (162) being an annular protuberance having a first portion (68) with an increasing radial length (65) and a second portion (70) with a decreasing radial length(65) wherein the first and second portions are contiguous (68, 70).

3. The motor cooling system (100) of claim 1 wherein the constricting section (262, 362) is positioned in the conduit (60) adjacent the first aperture (56), the constricting section (262, 362) having an increasing radial length (65) from the first aperture (56) to an internal wall (63) of the shroud (52).

4. The motor cooling system (100) of claim 2 wherein the constricting section (262) is an annular inclined surface, the annular inclined surface being inclined relative to the internal wall (63) of the shroud (52).

5. The motor cooling system (100) of claim 3 wherein the constricting section (362) is an annular convex surface, the annular convex surface facing the conduit (60).

6. The motor cooling system (100) of claims 4 or 5 wherein the constricting section (262, 362) is contiguous with the first aperture (56).

7. The motor cooling system (100) of claim 1 wherein the constricting section (462) is an outwardly flared projection extending from the shroud (52).

8. The motor cooling system (100) of claim 1 wherein the rib (530) encircles the blade (16).

9. The motor cooling system (100) of claims 1 or 8 wherein the rib (530) is curved at the leading edge (18) and is linear at the trailing edge (20).

10. The motor cooling system (100) of any one of preceding claims wherein the axial flow fan (10) is positioned in the fan guard (50) and wherein the axial flow fan (10) is mounted to a motor.
